(19) Europäisches Patentamt
European Patent Office
Office européen des brevets

(11) Veröffentlichungsnummer: **0 249 859**
**A2**

(12) # EUROPÄISCHE PATENTANMELDUNG

(21) Anmeldenummer: **87108343.2**

(22) Anmeldetag: **10.06.87**

(51) Int. Cl.⁴: **C07F 7/18**, C12P 7/62, C12P 41/00

(30) Priorität: **20.06.86 DE 3620646**

(43) Veröffentlichungstag der Anmeldung: **23.12.87 Patentblatt 87/52**

(84) Benannte Vertragsstaaten: **AT BE CH DE ES FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Schneider, Manfred, Prof. Dr.**
**Triebelsheider Weg 37**
**D-5600 Wuppertal 1(DE)**
Erfinder: **Laumen, Kurt, Dipl.-Chem.**
**Arrenberger Strasse 41**
**D-5600 Wuppertal 1(DE)**

(54) **Verfahren zur Herstellung von (1R, 4S) -4-Hydroxy-2-cyclopentenylestern.**

(57) Es wurde gefunden, daß man (1 R, 4S)-4-Hydroxy-2-cyclopentenylester (II) in hoher optischer Reinheit erhält, wenn man meso-cis-1,4-Diacyl-2-cyclopentene (I) mit hydrolytischen Enzymen behandelt.

EP 0 249 859 A2

## Verfahren zur Herstellung von (1R, 4S)-4-Hydroxy-2-cyclopentenylestern

Es wurde gefunden, daß man (1R, 4S)-4-Hydroxy-2-cyclopentenylester (II) in hoher optischer Reinheit erhält, wenn man meso-cis-1,4-Diacyl-2-cyclopentene (I) mit hydrolytischen Enzymen behandelt.

Dabei bedeutet Ac in den Formeln (I),(II) einen aliphatischen Acylrest mit 1-10, vorzugsweise 1-6 Kohlenstoffatomen. Dabei ist insbesondere an den Acetyl-und den Butyrylrest gedacht. Auch der 3-Phenylpropionylrest sei hier genannt.

Als Enzym kommt vor allem Schweinepankreaslipase (P.P.L., E.C.3.1.1.3) in Frage. Weiterhin sind geeignet Lipasen von:

Pseudomonas Sp.,
Mucor miehei und
Chromobacter viscosum

Die erfindungsgemäß verwendeten Enzyme können sowohl in löslicher Form, als auch als immobilisierte Enzyme, z.B. an Br-CN aktivierter Sepharose oder Oxiranacrylperlen oder Silicagel eingesetzt werden.

Insbesondere können nach dem erfindungsgemäßen Verfahren (1 R, 4S)-4-Hydroxypentenylacetat (IIa; Ac = Acetyyl) und (1R, 4S)-4-Hydroxypentenylbutyrat (IIb; Ac = Butyryl) hergestellt werden. Die Ausgangsprodukte (I) sind in großen Mengen aus billigen Startmaterialien zugänglich [C. Kaneko, A. Sugimoto, S. Tanaka, Synthesis 1974, 376].

Die Verbindungen II, insbesondere IIa (Ac = Acetyl) und IIb (Ac = Butyryl) sind wertvolle Ausgangsprodukte für die Synthese von zahreichen Cyclopentanoid-Naturprodukten, z.B.Brefeldin A, sesquiterpene, Prostaglandine [vgl. M. Nara, S. Terashine, S. Yamada, Tetrahedron 36, 316 (1980)].

Durch selektive Manipulation der funktionellen Gruppen sind die Verbindungen II in die anderen Enantiomeren (1S, 4R) überführbar.

Die Verbindungen II besitzen vielseitige Reaktionsmöglichkeiten.

Es hat sich nämlich gezeigt, daß die Behandlung der Verbindungen II mit 12,3-Dihdropyran/p-Toluolsulfonsäure (-)-(1 R, 4S)-4-Tetrahydropyranoxy-2-cyclopentylester (III) liefert, die bei der Hydrolyse in Gegenwart von Kaliumcarbonat in (-)-(1 R, 4S)-4-Tetrahydropyranoxy-2-cyclopentanol (IV) übergeht, welches ebenfalls in hoher optischer Reinheit anfällt.

Weiterhin können Verbindungen II in Trialkylsilyloxyderivate (IX) in denen der Alkylrest 1-6 Kohlenstoff atome enthält, bzw, das Tribenzylsilyloxyderivat übergeführt werden. Beispiele für die Silyloxygruppen solcher Silylether werden durch die nachstehenden Formeln veranschaulicht:

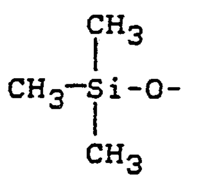 , 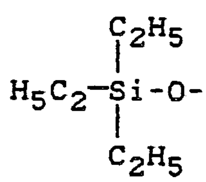 , 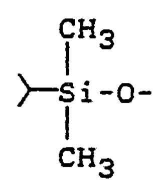 , 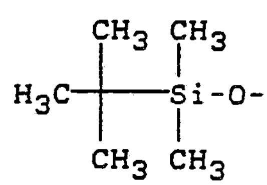

Trimethylsilyl, Triethylsilyl, Isopropyl-, dimethylsilyl, t-Butyldimethylsilyl

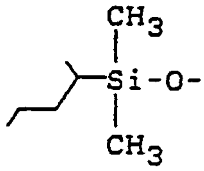 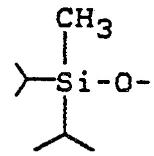 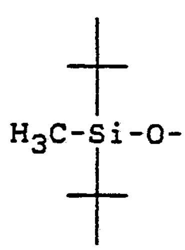 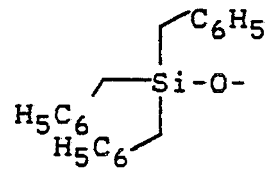

2-Methylbutyldimethylsilyl, Diisopropylmethylsilyl, Di-t-butylmethylsilyl, Tribenzylsilyl

Diese Verbindungen eignen sich besonders gut als Zwischenprodukte für Synthese von Cyclopentanoid-Naturprodukten. Insbesondere seien genannt die 4-Trimethylsilyloxy-2-cyclopentenylester und die 4-tert-Butyl-dimethylsilyloxy-2-cyclopentenylester.

Die Verbindungen II lassen sich nach bekannten Methoden zu (R)-4-Oxo-2-cyclopentenylestern (V) oxidieren. Behandeln von IV mit Benzoylchlorid und anschließende Hydrolyse mit p-Toluolsulfonsäure ergibt das Benzoat VI.

Unterwirft man die Verbindungen II oder IV der Claisen-Umlagerung (Triethylorthoacetat/Hydrochinon; 160°C) so erhält man die Lactone VII bzw. VII', die wertvolle Zwischenprodukte für die Synthese von Prostaglandinen sind. Durch dreistufige Verfahren über die "Prins-Reaktion" kann z.B. VII' in das "Corey-Laction" (VIII) überführt werden.

Das erfindungsgemäße Verfahren erlaubt die Herstellung der Verbindungen II, insbesondere von IIa (Ac = Acetyl) in ausgezeichneten chemischen Ausbeuten und in optischen Anfangsreinheiten, die denjenigen bekannter Mehrstufenverfahren entsprechen [K. Ogura, M. Yamaschita, Tetrahedron Letters 1979, 759]. Im Gegensatz zu umständlichen Methoden der Diastereomerentrennung [M. Gill, R.W. Richards, Tetrahedron Letters 1979, 1539] odcer zur ebenso möglichen Anwendung des "meso-Tricks" [M. Nara, S.Terashima, S. Yamada, Tetrahedron 36, 3161 (1980)] liefert die enantioselektive Hydrolyse von (I) nach dem erfindungsgemäßen Verfahren fast ausschließlich das einzige Enantiomer (II).

Durch einfache Umkristallisation erhält man diese Verbindung optisch rein.

Das nachstehende Reaktionsschema erläutert die erfindungsgemäße Umsetzung I → II sowie die Weiterverarbeitung der erhaltenen Verbindungen II.

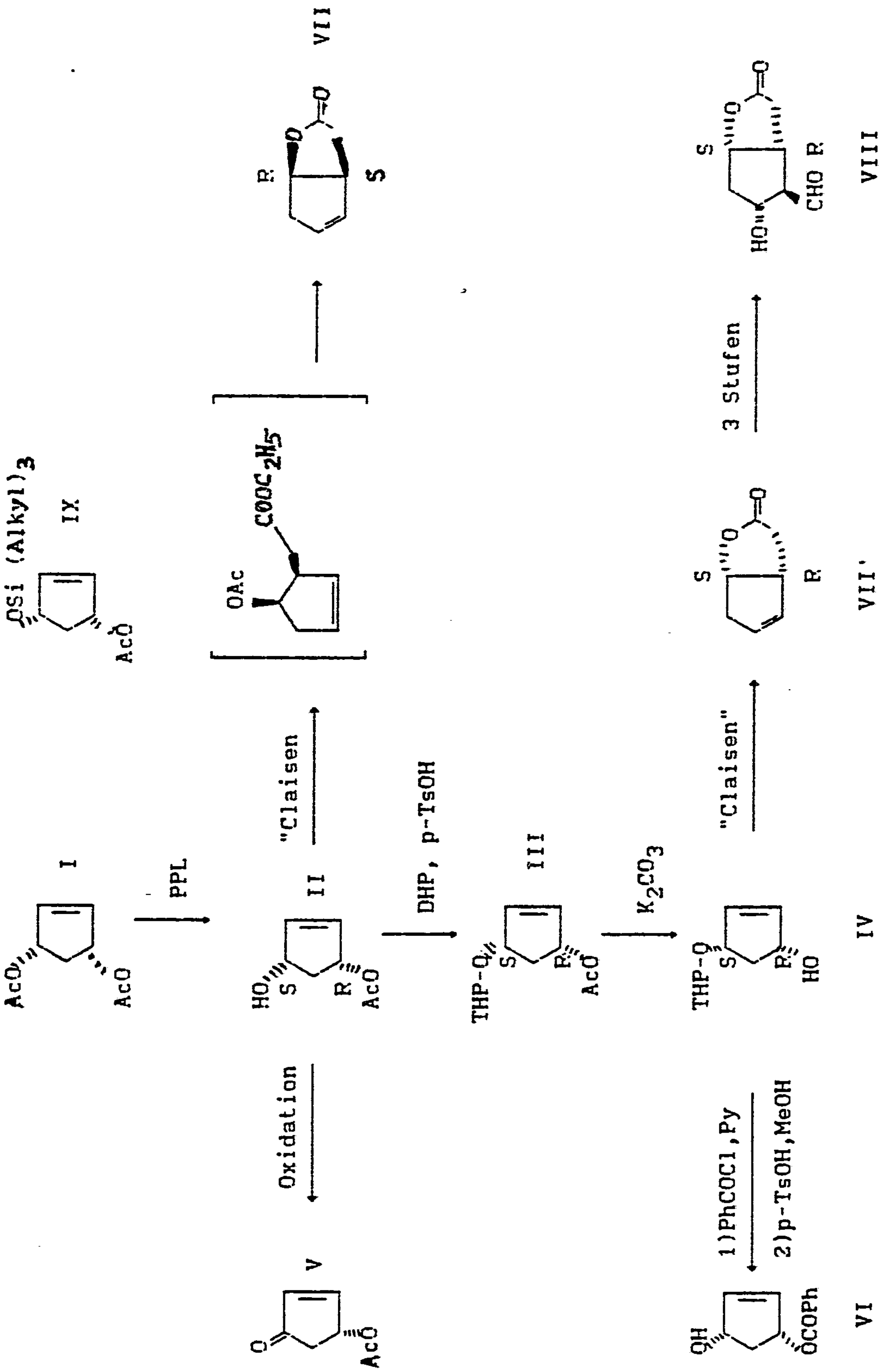


PPL : Schweinepankreaslipase
DHP : Dihydropyran
THP : Tetrahydropyranyl
p-TsOH: para-Toluolsulfonsäure
Ph : Phenyl
Py : Pyridin
MeOH : Methanol

Herstellungsbeispiele

Beispiel 1

0,2 mol (36, 8 g) meso-cis-1,4-Diacetoxy-2-cyclopenten werden in 125 ml 0.1 Phosphatpuffer (pH 7) bei 40°C suspendiert und mit 3000 Einheiten (100 mg) Pseudomonas Sp. Lipase (Rohprodukt) behandelt. Der pH-Wert wird während der Reaktion durch ständig Zugabe von 2 N Natronlauge konstant gehalten. Nach 18 Stunden (50% Umsetzung bzgl. der Hydrolyse beider Estergruppen) wird durch Extraktion mit Ether aufgearbeitet. Man erhält 25,6 g (90%) (+)-(1R, 4S)-4-Hydroxy-2-cyclopentenylacetat (IIa), das nach einmaligem Umkristallisieren (aus Ether/Petrolether = 1:1,4) 24,2 g (85%) optisch reines Material ergibt.
$[\alpha]_D^{20}$ = + 65.5° (c = 2,3 $CHCl_3$ 1 % EtOH)

In der folgenden Tabelle sind die weiteren Ergebnisse der erfindungsgemäßen Hydrolyse von Ia in IIa (Ac = Acetyl) und Ib in IIb (Ac - Butyryl) zusammengefaßt. Die ursprüngliche Enantiomereneinheit des Produktes (1R, 4S-Verbindungen) (vor Aufarbeitung) wurde mittels Gaschromatographie (50 m Kappilarsäule, Carbowax 20 M, T = 150°C) des entsprechenden diastereomeren Mosheresters bestimmt.

-Ia = meso-cis-1,4-Diacetoxy-2-cyclopenten
-Ib = meso-cis-1,4-Dibutyroloxy-2-cyclopenten
-Puffer = 0.1 M Phosphatpuffer (pH 7)
-Enzympräparate wurden als Rohprodukt eingesetzt
-Umkristallisation aus Diethylether : Petrolether = 1:1,4 bei 0°C
$\alpha_D^{20}$ = + 68.8° (c = 2,3 $CHCl_3$ stab. 60 ppm Amylen)

| Substrat | Menge Substrat [mmol] | Menge Puffer [g] | Lipase von | Umsetzung[a)] [%] | Ausbeute [%] | e.e.[b)] [%] |
|---|---|---|---|---|---|---|
| Ia | 5 | 20 | Schweinepankreas | 52 | 87 | 92(>99) |
| Ia | 10 | 20 | Pseudomonas Sp. | 47 | 84 | 92(>99) |
| Ia | 10 | 30 | Pseudomonas Sp | 50 | 80 | 94(>99) |
| Ia | 10 | 30 | Mucor miehei | 50 | 85 | 95(>99) |
| Ia | 20 | 20 | Mucor miehei | 50 | 90 | 96(>99) |
| Ia | 20 | 25 | Mucor miehei | 48 | 90 | 97(>99) |
| Ia | 65 | 40 | Mucor miehei | 51 | 89 | 97(>99) |
| Ia | 5 | 20 | Chromobac. viscosum | 50 | 76 | 91(>99) |
| Ia | 20 | 15 | Chromobac. viscosum | 50 | 80 | 93(>99) |
| Ib | 10 | 30 | Schweinepankreas | 50 | 86 | 95(Öl) |
| Ib | 10 | 25 | Mucor miehei | 49 | 80 | 93(Öl) |

a) bezogen auf Hydrolyse beider Estergruppen;
b) Wert in Klammern nach Umkristallisieren

Beispiel 2

5-(R)-Acetoxy-3-(S)-trimethylsilyloxy-cyclopent-1-en (IX, Alkyl = Methyl, Ac = Acetyl).

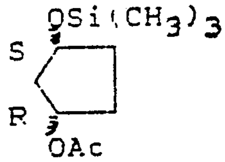

1,113 g (7,84 mmol) (1R, 4S)-4-Hydroxy-2-cyclopentenylacetat (IIa, Ac = Acetyl) werden in 5 ml absolutem Pyridin unter Zugabe von 0,1 g 4-(N-N-Dimethylamino)pyridin und 20 ml $CCl_4$ gelöst. Unter Rühren tropft man 1,629 g (15 mmol) $(CH_3)_3SiCl$ zu und rührt 5 Minuten bei Raumtemperatur. Anschließend gibt man 20 ml gesättigte $NaHCO_3$-Lösung zu, schüttelt mit 50 ml Ether aus, trocknet die organische Phase über $Na_2SO_4$, verdampft das Lösungsmittel im Vakuum und destilliert den Rückstand nach Zugabe einer Spur Natriumacetat im Vakuum.

Ausbeute: 1,095 g (65% der Theorie) einer farblosen Flüssigkeit vom Siedepunkt 51°C / 0,1 Torr.
$[\alpha]_D^{20}$ = + 3,6° c = 4,475 ($CHCl_3$)
In analoger Weise werden die nachstehenden Verbindungen der allgemeinen Formel

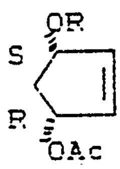

hergestellt.

| Bsp.-Nr. | R | Siedepunkt | $[\alpha]^{20}_{D}$, $CHCl_3$ |
|---|---|---|---|
| 3 | Dimethyl-iso-propylsilyl | $76^0$ C/0,2 torr | + $3,4^0$ |
| 4 | Dimethyl-2-pentyl silyl | $107^0$ C/0,2 torr | + $2,9^0$ |
| 5 | Diisopropyl-methylsilyl | $127^0$ C/0,2 torr | + $2,5^0$ |
| 6 | Triethylsilyl | $121^0$ C/0,2 torr | + $3,1^0$ |
| 7 | Triisopropyl-silyl | $168^0$ C/0,05 torr | + $2,0^0$ |
| 8 | Dimethyl-tert.-butylsilyl | | + $2,3^0$ |
| 9 | Di-tert-butyl-methylsilyl | | + $1,7^0$ |
| 10 | Tribenzylsilyl | | + $40,7^0$ |

## Ansprüche

1. Verfahren zur Herstellung von 1R, 4S)-4-Hydroxy-2-cyclopentenylestern der Formel (II)

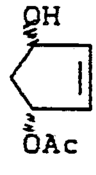

(II)

in der Ac für einen aliphatischen Acylrest mit 1-10 Kohlenstoffatomen steht,

dadurch gekennzeichnet, daß man

meso-cis-1,4-Diacyl-2-cyclopentene der Formel (I)

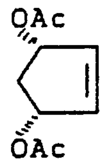

I

mit hydrolytischen Enzymen behandelt.

2. Verfahren nach Anspruch 1, dadurch gekennzeichnet, daß Ac für einen aliphatischen Acylrest mit 1-6, vorzugsweise 1-4 Kohlenstoffatomen steht.

3. Verfahren zur Herstellung von (1R, 4 S)-4-Hydroxy-2-cyclopentenylacetat, dadurch gekennzeichnet, daß man meso-cis-1,4-Diacetoxy-2-cyclopenten mit Schweinepankreaslipase behandelt.

4. Verfahren zur Herstellung von (1R, 4S)-4-Hydroxy-2-cyclopentenylacetat, dadurch gekennzeichnet, daß man meso-cis-1,4-Diacetoxy-2-cyclopenten mit Pseudomonas Sp. Lipase behandelt.

5. Verfahren zur Herstellung von (1R, 4S)-4-Hydroxy-2-cyclopentenylacetat, dadurch gekennzeichnet, daß man meso-cis-1,4-Diacetoxy-2-cyclopenten mit Mucor miehei Lipase behandelt.

6. Verfahren zur Herstellung von (1R, 4S )-4-Hydroxy-2-cyclopentenylacetat, dadurch gekennzeichnet, daß man meso-cis-1,4-Diacetoxy-2-cyclopenten mit Chromobacter viscosum behandelt.

7. Verfahren nach Anspruch 1 und 2, dadurch gekennzeichnet, daß man die Enzyme in immobilisierter Form einsetzt.

8. (1R , 4S)-4-Hydroxy-2-cyclopentenylacetat in einer optischen Reinheit von mindestens 95%.

9. 4-Trialkylsilyloxy-2-cyclopentenylester der Formel (IX)

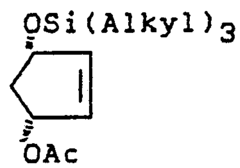

(IX)

in der der Alkylrest 1-6 Kohlenstoffatome enthält und Ac die oben angegebene Bedeutung hat.

10. Verwendung von 4-Trialkylsilyloxy-2-cyclopentenylestern der Formel IX in Anspruch 9 und/oder von 4-Tribenzylsilyloxy-2-cyclopentenylacetat als Zwischenprodukte bei der Synthese von Cyclopentanoid-Verbindungen.